# FASCICULE DE BREVET EUROPEEN

(11) **EP 3 990 884 B1**
(45) Date de publication et mention de la délivrance du brevet: **13.08.2025**
(21) Numéro de dépôt: 20742656.0
(22) Date de dépôt: 26.06.2020
(51) Int. Cl.: G01N 1/22, A62B 18/00, A62B 27/00, A62B 19/00

(54) **ENSEMBLE DE CONTRÔLE DE L'ATMOSPHÈRE RÉGNANT AU SEIN D'UN PREMIER ENVIRONNEMENT ISOLÉ PAR RAPPORT À UN SECOND ENVIRONNEMENT**
ANORDNUNG ZUR KONTROLLE DER VORHERRSCHENDEN ATMOSPHÄRE IN EINER ERSTEN UMGEBUNG, DIE AUS EINER ZWEITEN UMGEBUNG ISOLIERT IST
ASSEMBLY FOR CHECKING THE ATMOSPHERE PREVAILING WITHIN A FIRST ENVIRONMENT ISOLATED FROM A SECOND ENVIRONMENT

(30) Priorité: 28.06.2019 FR 1907206
(43) Date de publication de la demande: 04.05.2022
(73) Titulaire: Carrefour du Laboratoire - Tecora, 91140 Villebon-sur-Yvette (FR)
(72) Inventeur: LEBRUN-TAUGOURDEAU, Grégoire, 92110 CLICHY (FR); FOUCHARD, Pascal, 77610 FONTENAY-TRESIGNY (FR)
(74) Mandataire: IPAZ
(86) Numéro de dépôt international: PCT/EP2020/068169
(87) Numéro de publication internationale: WO 2020/260672

(56) Documents cités:
- EP-A1- 0 311 516
- EP-A1- 3 228 289
- EP-A1- 3 305 454
- RU-C1- 2 669 318
- US-A1- 2009 139 352

## Description

La présente invention concerne un ensemble de contrôle, en particulier de la qualité et/ou de la composition, de l'atmosphère régnant au sein d'une enceinte close définissant un premier environnement isolé d'un second environnement différent en termes de qualité d'air ou de composition de l'atmosphère. Cet ensemble comprend notamment un dispositif de prélèvement destiné à collecter des éléments présents dans l'atmosphère régnant au sein d'une enceinte close. Un tel dispositif est en particulier destiné à permettre le contrôle de la qualité de l'air dans une enceinte close, de préférence étanche, en particulier un équipement de protection individuel isolant tel qu'un équipement de protection individuel respiratoire. Un tel dispositif trouve une application particulièrement avantageuse dans le domaine du retrait d'amiante.

Dans le domaine de la collecte de particules permettant de contrôler la qualité d'un milieu, on connaît le document US-A-2009/0139352 qui propose un appareil permettant de collecter des particules contenues dans un appareil d'inhalation de médicaments délivrant des doses de médicaments. Cet appareil de collecte comprend un corps définissant une chambre de collecte; un adaptateur de vide relié de manière amovible à une première extrémité dudit corps, ledit adaptateur de vide ayant un orifice communiquant avec une source de vide et ayant un filtre disposé dedans ; l'autre extrémité dudit corps étant raccordable à un inhalateur tandis qu'un agitateur est monté dans ladite chambre de collecte. Pour pratiquer la collecte on déclenche l'inhalateur, la source de vide attire le produit en poudre qui se retrouve sur le filtre. Puis le corps est déconnecté de la source de vide et de l'inhalateur pour recevoir une solution permettant de dissoudre le produit en poudre de sorte que des particules étrangères à cette poudre se retrouvent ainsi en suspension et peuvent être décelées par des techniques de détection optique de particules. Le corps de cet appareil permet donc à la fois la collecte et l'analyse des particules. Ceci est réalisé dans le but de vérifier et certifier la qualité des dispositifs distributeurs de médicaments pulvérulents tels que les inhalateurs.

Dans US-B-6463815, est proposé un dispositif d'échantillonnage de gaz permettant de prélever un échantillon de gaz au sein d'un réseau d'alimentation en air stérile et de le tester. Ce dispositif de prélèvement comprend un orifice de prélèvement vers un compartiment qui présente un orifice de sortie raccordée à un dispositif d'aspiration, le compartiment comprenant un filtre pour recueillir des contaminants potentiels. Ce dispositif permet de prélever des échantillons sur le réseau d'alimentation en air stérile de manière à vérifier que les filtres installés dans le réseau jouent bien leur rôle de filtration. On contrôle ainsi la qualité de la filtration qui est réalisée.

Dans US-A-2005/0136540 est proposé un dispositif permettant d'isoler, collecter et transférer des échantillons pour la détection de risques biologiques, en particulier dans le courrier postal. Ainsi, les courriers ou colis sont encapsulés dans un emballage étanche avant d'être testé. Ce test consiste à connecter l'intérieur du paquet scellé avec un système permettant de prélever l'air dans le paquet scellé jusqu'à une chambre de filtration où des particules contaminantes peuvent être retenues pour être ensuite analysées. Un tel système permet ainsi de limiter les risques biologiques liés au courrier mais est lourd à mettre en œuvre d'un point de vue économique.

Par le document RU-A-2669318 est connu un dispositif de collecte de particules émises lors d'une opération de soudage. Ce dispositif comporte un tube comprenant un élément de collecte, le tube traversant le masque de protection et présentant une extrémité débouchant au niveau de la zone de respiration de l'opérateur tandis que son extrémité opposée est raccordée à une pompe. On espère ainsi récupérer des particules volatiles qui pourraient se trouver au niveau de la zone respiratoire. Toutefois un tel système ne garantit pas que l'air prélevé soit effectivement celui respiré par l'opérateur, notamment du fait du positionnement incorrect de ce système par l'utilisateur.

Par le document EP-0311516-A1 est connu un perfectionnement aux raccords de masques respiratoires et plus particulièrement un perfectionnement permettant la détermination du taux de pollution de l'air contenu à l'intérieur du masque. Ce document se rapporte également aux masques respiratoires contenant un tel raccord de masque perfectionné.

L'amiante est un silicate ferromagnésien. Il ne désigne pas une catégorie ou une famille de minéraux mais regroupe des matériaux fibreux possédant de nombreuses caractéristiques communes. Parmi les différentes roches fibreuses, six silicates fibreux sont appelés « amiante ». Ils sont référencés réglementairement dans la directive 2009/148/CE du 30 novembre 2009 concernant la protection des travailleurs contre les risques liés à une exposition à l'amiante pendant le travail.

On le retrouve sous deux principales formes minéralogiques : les amphiboles et les serpentines. Différentes sources peuvent être à l'origine d'exposition aux fibres d'amiante :
des sources d'origine géologique dues à la présence naturelle d'amiante dans les terrains,
des sources d'origine anthropique dues à la présence d'amiante dans les installations et matériaux.

Dans les deux cas, les fibres d'amiante sont libérées dans l'atmosphère par dégradation des installations et matériaux ou par intervention direct sur les différentes sources.

L'amiante a été utilisé massivement pendant plus de 130 ans, sous différentes formes, pour ses propriétés physico-chimiques incomparables, notamment dans le secteur de la construction, telles que : la résistance au feu, la faible conductivité thermique, acoustique et électrique, une bonne résistance à la traction, une résistance aux agressions chimiques, une élasticité et une flexibilité.

L'amiante a également été utilisé pour fabriquer des produits aussi divers que des papiers, cartons, enduits, colles, joints, revêtements de sol... Jusqu'en 2012, deux types de produits étaient définis :
Les produits dits « friables », comme le flocage, desquels les fibres se détachent au fur et à mesure du vieillissement du matériau. On les rencontre dans certains faux plafonds ou matériaux d'isolation (en projection, en calorifugeage...),

Les produits dits « durs », comme l'amiante-ciment, qui libèrent des fibres uniquement par sciage ou perçage. Ces produits se retrouvent notamment sous forme de conduits, de plaques ou d'éléments de toiture.

Depuis 1997 (décret n°96-1133 du 24 décembre), la fabrication, la transformation, l'importation, la mise sur le marché national, l'exportation, la cession même gratuite de toutes les variétés de fibres d'amiante, incorporées ou non dans des matériaux est interdite.

**Il** est reconnu aujourd'hui que toutes les variétés d'amiante sont cancérigènes. Cependant, l'inhalation de poussières d'amiante peut être également la cause d'altérations des fonctions respiratoires (plaques pleurales, asbestose ou fibrose pulmonaire). Ces pathologies peuvent apparaître de nombreuses années après la période d'exposition, même si aucun seuil d'effet sanitaire ne peut être déterminé chez l'homme pour les fibres d'amiante quel que soit leur nature ou leur caractère dimensionnel.

Il est donc nécessaire de pouvoir procéder au désamiantage des installations présentant un risque amiante et pour se faire de réaliser ces opérations de désamiantage dans les conditions de sécurité les plus optimales pour les opérateurs.

Certains de ces chantiers sont potentiellement très émittifs ce qui nécessite de garantir la sécurité des opérateurs. A cet effet, les opérateurs utilisent des Equipements de Protection individuel Respiratoire (EPR) isolants et alimentés en air respirable. Un tel équipement lorsqu'il est porté par l'utilisateur définit donc une enceinte close et étanche par rapport au milieu environnant, dans laquelle l'air doit être maintenu sain.

De manière classique, et afin de garantir un environnement de travail sain et sûr pour les opérateurs intervenant, on utilise donc des instruments de prélèvement de l'air ambiant permettant l'évaluation du risque amiante afin de définir et prévoir les équipements de protection individuels respiratoires les plus appropriés. Ainsi, on mesure la présence de l'amiante dans l'atmosphère du chantier où se trouvera l'opérateur portant un EPR tel qu'un masque et on calcule son exposition via un facteur d'étanchéité du masque.

Toutefois, une étude menée par l'INRS (Institut National de Recherche et Sécurité) a conclu qu'il y avait une différence significative entre l'exposition calculée par cette méthode et une méthode de mesure directe de la concentration d'amiante dans l'ambiance du masque.

Il apparaît que l'évaluation actuelle du risque amiante tient compte de l'environnement pollué mais ne permet pas de définir avec certitude l'exposition d'un utilisateur en condition d'utilisation.

La présente invention a donc pour but de proposer un ensemble de contrôle de l'atmosphère isolée, dans laquelle un opérateur évolue par rapport à un environnement pollué, par exemple et comprenant un dispositif de prélèvement destiné à récupérer des éléments présents dans cet environnement isolé tel que l'intérieur d'un équipement de protection individuel isolant porté par un utilisateur. A cet effet, l'invention a pour objet un ensemble de contrôle de l'atmosphère régnant au sein d'un premier environnement isolé par rapport à un second environnement différent en termes de qualité d'air et/ou de composition de l'atmosphère selon la revendication 1.

Ainsi, le dispositif peut être monté avec son extrémité de prélèvement débouchant sur l'environnement isolé pour y prélever l'atmosphère y régnant et collecter des éléments recherchés pouvant y être présents et ce, depuis l'environnement extérieur sans perturber l'isolement de l'environnement isolé testé.

Ainsi, cet environnement est isolé d'un deuxième environnement par des moyens d'isolation ou séparation appropriés et peut se trouver, par exemple, au sein d'une enceinte close isolant l'atmosphère qui y règne de l'atmosphère environnante, le dispositif étant monté sur l'enceinte pour permettre de prélever l'atmosphère isolée sans rompre son isolement et, de préférence sans avoir besoin d'entrer totalement dans ladite l'enceinte.

Il est ainsi possible de prélever au sein d'un environnement maintenu clos et isolé, par exemple pour des exigences de sécurité, par rapport à un environnement différent en termes de qualité d'air ou de composition de l'atmosphère, par exemple pollué et/ou contaminé par des substances dangereuses ou d'une composition chimique non respirable, l'atmosphère qui y règne pour contrôler que cette atmosphère reste saine et ceci sans rompre la séparation entre les deux environnements ou milieux. Ces moyens de séparation peuvent être un masque respiratoire isolant. Une fois, le prélèvement effectué, le dispositif est démonté et les moyens de retenue sont récupérés pour analyse. Le dispositif comporte donc des moyens de fixation sur les moyens d'isolation ou séparation délimitant l'environnement isolé qui permettent donc à la fois le montage et le démontage du dispositif sans endommager ces moyens.

Ainsi, un ensemble selon l'invention est pour contrôler l'air qui règne dans un équipement de protection individuel isolant (EPI) tel qu'un équipement de protection respiratoire (EPR) utilisé dans des environnements de travail dangereux pour les opérateurs. L'intérieur de l'EPR ainsi utilisé constitue l'environnement isolé par rapport à l'environnement extérieur de travail.

Ainsi, de manière avantageuse, le dispositif de prélèvement lorsqu'il est implanté dans un EPR tel qu'un masque de protection respiratoire isolant porté par un utilisateur, définissant pour l'utilisateur une enceinte close, étanche, renfermant de l'air respirable par rapport à l'environnement extérieur, permet de prélever l'air régnant au sein du masque par son orifice de prélèvement, grâce à des moyens d'aspiration auxquels il est raccordé par son orifice de raccordement, l'air traversant le compartiment et les moyens de retenue interposés entre les deux ouvertures. Les éléments recherchés peuvent ainsi être captés par les moyens de retenue et une fois l'utilisation de l'EPR terminée, il est possible de récupérer la cassette de prélèvement et par conséquent, les moyens de retenue, et de procéder ainsi au contrôle de la présence ou non des éléments recherchés et déterminer leur concentration le cas échéant.

Le dispositif de prélèvement d'un ensemble selon l'invention se présente donc sous la forme d'un dispositif implantable dans un équipement de protection individuel EPI tel qu'un équipement de protection respiratoire EPR isolant, au travers d'une paroi de celui-ci, de manière à mettre son orifice de prélèvement débouchant dans l'atmosphère que l'on souhaite étudier, les moyens de fixation du dispositif étant agencés pour permettre son implantation étanche et son enlèvement ensuite pour permettre la collecte des moyens de retenue et leur analyse et leur conservation dans des archives permettant ainsi de garder trace des conditions sanitaires du travail effectué.

De manière avantageuse, un tel dispositif est implantable dans un masque de protection respiratoire de classe III (risque grave ou mortel) pour des opérateurs exerçant dans un milieu à risque tel que du type risque amiante. A cet effet, le compartiment de la cassette est en outre étanche de manière à éviter également que des contaminants tels que les fibres d'amiante captées ne soient pas dispersées lorsqu'on récupère le dispositif pour analyse.

Dans le cadre d'une utilisation particulière pour le risque amiante sur un EPR du type masque/combinaison, le dispositif selon l'invention permet d'effectuer un prélèvement au niveau de l'air contenu dans le masque, c'est-à-dire l'air que respire l'utilisateur du masque, l'enceinte étant délimitée notamment par la face intérieure du masque. Il est ainsi possible de contrôler directement la teneur en fibres d'amiante par exemple à l'intérieur du masque et ce, en situation de travail, par prélèvement de l'air à l'intérieur du masque lors de l'utilisation.

Un tel dispositif permet avantageusement de garantir la sécurité des opérateurs. L'air prélevé est ainsi directement l'air présent à l'intérieur du masque et inhalé par l'utilisateur du masque.

Un tel dispositif de prélèvement est utilisable dans tous milieux définis par un EPI dans lequel on souhaite contrôler la présence ou non de substances polluantes, dangereuses et autres. On peut donc envisager que cet EPI soit une combinaison intégrale de protection isolante contre les risques biologiques, chimiques, etc, le dispositif étant implanté dans la partie masque respiratoire de la combinaison.

De manière avantageuse, les moyens de retenue ou piégeage des éléments recherchés sont choisis en fonction du type d'éléments recherchés qui peuvent être des fibres, des particules, des particules fines, des métaux lourds (As, Cd, Cr, Cu, Hg, Ni, Pb, Se, Zn...), des polluants organiques persistants (POP) tels que les dioxines et furanes, des polluants gazeux tels que le benzène, le toluène, l'ammoniaque, les oxydes de soufre, les oxydes d'azote, les composés organiques volatils (COV), cette liste n'étant pas exhaustive.

Les moyens de retenue sont ainsi choisis parmi les filtres, les tubes de prélèvement, cartouches de prélèvement comportant des adsorbants tels que charbon actif, carbone graphite noir, polymère poreux, gels de silice et tous autres moyens de retenue/piégeage appropriés en fonction des éléments que l'on veut piéger.

Selon un mode de réalisation préféré, la cassette comprend une embase sous forme d'un corps cylindrique tubulaire définissant le compartiment dans lequel sont logés des moyens de retenue d'éléments dont la concentration dans l'atmosphère prélevée est recherchée, ledit corps présentant deux extrémités opposées ouvertes, l'une formant l'orifice de prélèvement et l'autre opposée formant l'orifice de raccordement, les moyens de retenue étant logés dans le compartiment, interposés entre les deux orifices.

De préférence, dans le cas de l'utilisation d'un EPR dans un cadre risque amiante, la cassette comporte en tant que moyens de retenue : un filtre pour fibres amiante et un support de filtre. De préférence, on utilise un filtre à membrane en esters de cellulose mélangés (MCE ou MEC) qui est composé de mélanges purs et biologiquement inertes d'acétate de cellulose et de nitrate de cellulose. Les membranes MCE sont naturellement pauvres en métal et sont compatibles avec les bases et acides dilués et les hydrocarbures aromatiques et aliphatiques. Les filtres MCE sont hydrophiles et autoclavables, et sont particulièrement bien adaptés pour capter et analyser ensuite les fibres d'amiante. Le support de filtre est de préférence du type support tampon en cellulose.

Selon une forme de réalisation préférée, l'embase comporte une première partie d'un certain diamètre et une deuxième partie de diamètre inférieur au diamètre de la première partie.

A la jonction entre les deux parties de l'embase apparaît un épaulement contre lequel sont logés des moyens de retenue tels qu'un filtre sur lequel est ensuite positionné un support de filtre. Si aucun épaulement n'est ménagé dans l'embase, des moyens de fixation pour les moyens de retenue peuvent être prévus.

L'extrémité ouverte de la partie de plus petit diamètre constitue l'orifice de prélèvement et est agencée pour être fixée sur des moyens de séparation entre les environnements tels que le masque et déboucher ainsi dans l'atmosphère régnant à l'intérieur dudit masque lorsqu'il est porté par un utilisateur.

L'extrémité de la partie de plus grand diamètre est l'extrémité formant l'orifice de raccordement destiné à être raccordé à un dispositif d'aspiration P tel qu'une pompe à l'aide de moyens de raccordement.

Ainsi, une fois la cassette implantée sur un masque et branchée à une pompe qui fonctionne, on prélève l'air présent dans le masque au travers de la cassette de prélèvement, l'air entrant dans la cassette par l'orifice de prélèvement, traversant les moyens de retenue tel que le filtre, qui retiennent ainsi les éléments recherchés s'ils sont présents et sortant de l'embase par l'orifice de raccordement vers la pompe.

De préférence, l'orifice de raccordement de l'embase présente un couvercle fixé de manière étanche sur ladite embase. Ce couvercle est constitué d'un disque de même diamètre que l'extrémité de raccordement de l'embase et pourvu d'un orifice central dans lequel est monté un élément de raccordement à un dispositif d'aspiration.

Cet élément de raccordement est de préférence un raccord presse étoupe permettant la fixation étanche d'une extrémité de tuyau, de préférence flexible, dont l'autre extrémité est raccordée à la pompe d'aspiration. Avant utilisation, l'élément de raccordement présente un bouchon d'obturation.

Le couvercle est fixé sur l'extrémité de raccordement de l'embase de manière étanche. De préférence, le couvercle et l'extrémité de raccordement de l'embase présentent à cet effet des moyens complémentaires de fixation, tels que des moyens de vissage, permettant une fixation étanche à l'aide du couple de serrage.

Le dispositif de prélèvement présente avantageusement ainsi des caractéristiques lui permettant de présenter les propriétés mécaniques exigées par les tests d'homologation des EPI notamment en traction et d'éviter également la présence d'espaces ou de fentes où les poussières d'amiante pourraient se loger et contaminer l'extérieur des chantiers

L'orifice de prélèvement de l'embase présente des moyens de fixation sur un orifice de fixation ménagé sur le masque qui présente des moyens de fixation complémentaires. Ces moyens de fixation du masque sont constitués d'une bague de fixation au travers de laquelle l'orifice de prélèvement du dispositif est engagé pour déboucher sur la face intérieure du masque. De préférence, les moyens de fixation sont constitués de moyens de vissage prévus sur l'embase côté orifice de prélèvement et la bague de fixation prévue au niveau du masque est pourvue de moyens de vissage complémentaires permettant de monter de manière étanche la cassette sur le masque puis de démonter celle-ci.

Ces moyens de fixation sont de préférence des moyens de vissage complémentaires tels qu'un taraudage ménagé à l'intérieur de la bague de fixation du masque complémentaire d'un filet ménagé sur la face extérieure de l'extrémité de prélèvement de la cassette. Le pas de vis est dédié notamment pour éviter le montage d'un dispositif non conforme évitant de mettre en place un dispositif qui ne serait pas adéquat. Un joint d'étanchéité est en outre mis en place entre l'embase et la bague de fixation pour garantir un montage étanche du dispositif de prélèvement sur le masque. Le dispositif selon l'invention est ainsi fixable de manière étanche et propre sur l'équipement sans risque d'endommager ce dernier ou de le déformer.

Ainsi, de manière très avantageuse, pour permettre un meilleur contrôle de la sécurité environnementale des opérateurs sur ces chantiers de désamiantage, on mesure la qualité de l'air se trouvant directement à l'intérieur de ces EPI ce qui permet de s'assurer de la sécurité des opérateurs les utilisant. En effet, en procédant au prélèvement de l'air à l'intérieur d'un masque de protection d'un opérateur de désamiantage et pendant son utilisation, on peut ainsi contrôler la qualité de l'air qui est présente dans l'équipement de protection respiratoire en utilisation et à partir de ce contrôle valider ou invalider la performance de cet équipement.

On apporte ainsi une solution pour piéger efficacement les fibres en suspension dans l'air à l'intérieur du masque de façon à pouvoir évaluer l'exposition des personnes respirant dans un environnement isolé mais évoluant dans un environnement contaminé. Jusqu'à présent, on mesurait la présence du polluant dans l'atmosphère où se trouve la personne portant le masque, et on calcule son exposition via un facteur d'étanchéité du masque. Avec ce dispositif de l'ensemble, c'est l'exposition directe réelle de l'utilisateur de l'EPR qui est mesurée et ce de manière simple, rapide et précise puisqu'il n'y a plus de facteurs à extrapoler. L'ensemble selon l'invention permet une mesure de l'exposition à des polluants chimiques, par exemple, dans les masques de protection.

L'ensemble selon l'invention est réalisé de sorte qu'une fois le dispositif de prélèvement implanté dans l'EPR, il est étanche ce qui lui permet, sur des chantiers à risque type amiante ou autre, lors de la fin des opérations de permettre à l'opérateur de pouvoir être décontaminé notamment par douche, sans perdre les caractéristiques analytiques du dispositif. Le compartiment de la cassette étant étanche, le prélèvement est préservé malgré la douche ou autres procédés de décontamination utilisés.

Par ailleurs, comme le dispositif est étanche, il ne peut être un véhicule de contamination de l'extérieur du chantier puisqu'il ne présente pas de plis, de fentes qui pourraient retenir des poussières d'amiante.

Le dispositif est notamment réalisé en un matériau présentant les propriétés antistatiques appropriées tel que du polyéthylène chargé carbone ce qui évite que des fibres d'amiante ne se collent aux parois de la cassette et ne faussent le résultat. Ce matériau présente également des propriétés appropriées de résistance mécanique aux essais de traction et de résistance aux essais au feu.

De manière avantageuse, un dispositif de prélèvement de l'ensemble selon l'invention répond aux tests de validation des EPI de classe III: test au feu, traction, arrachement... et présente une ergonomie n'apportant pas de gêne ou de danger à l'utilisateur, en étant compatible avec les EPI sur lesquels il sera fixé.

Un dispositif de prélèvement de l'ensemble selon l'invention constitue ainsi de manière avantageuse un support d'analyse avantageux en terme de pureté et de traçabilité appropriées, qui présente des propriétés antistatiques appropriées pour une utilisation en environnement risque amiante, offrant notamment une très bonne protection de l'échantillon récolté.

Un exemple ne relevant pas de l'invention revendiquée concerne également un ensemble de prélèvement, destiné à collecter des éléments présents dans l'atmosphère régnant au sein d'un environnement isolé, comprenant un dispositif de prélèvement selon l'invention et une pompe d'aspiration raccordée audit dispositif par un tuyau flexible monté sur l'orifice de raccordement dudit dispositif.

De manière à permettre la manipulation du dispositif de prélèvement, celui-ci comporte en outre des outils tels que deux clés l'une permettant le vissage/dévissage de l'élément de raccordement et du tuyau flexible, l'autre permettant l'ouverture du compartiment par dévissage du couvercle pour collecter les moyens de retenue. Le couvercle peut ainsi avoir une empreinte ménagée dans la masse du couvercle. De préférence, ces deux clés sont prévues sur un même support. Un autre outil peut être un étui dans lequel est logeable la cassette avec son orifice de raccordement en saillie dudit étui, de manière à favoriser le démontage de la cassette en toute sécurité.

L'invention a également pour objet un procédé de contrôle de la qualité et/ou de la composition de l'atmosphère régnant au sein d'un équipement de protection individuel isolant tel qu'un équipement de protection respiratoire **EPR** délimitant dans ledit équipement un premier environnement isolé par rapport à un second environnement différent en termes de qualité d'air ou de composition de l'atmosphère selon la revendication 13.

De manière avantageuse, le procédé permet de collecter au sein d'un environnement maintenu clos et isolé, par exemple pour des exigences de sécurité, par rapport un environnement différent en termes de qualité d'air et/ou de composition de l'atmosphère, par exemple pollué et/ou contaminé par des substances dangereuses ou d'une composition chimique non respirable, l'atmosphère qui y règne pour contrôler que cette atmosphère reste saine et ceci sans rompre la séparation entre les deux environnements ou milieux tel qu'un masque respiratoire isolant et ce, lors de l'utilisation du masque. Le procédé est mis en œuvre à l'aide d'un ensemble selon l'invention qui comprend l'équipement de protection individuel isolant tel qu'un équipement de protection respiratoire (EPR) délimitant le premier environnement isolé par rapport à un second environnement différent en termes de qualité d'air ou de composition de l'atmosphère, et le dispositif de prélèvement destiné à collecter des éléments présents dans l'atmosphère régnant au sein du premier environnement défini par ledit équipement de protection, ainsi que des moyens d'aspiration. Une fois, le prélèvement effectué, le dispositif est démonté de l'équipement de protection individuel et les moyens de retenue sont récupérés pour analyse.

De préférence, on conserve les moyens de retenue dans des archives.

On décrira maintenant l'invention plus en détails en référence aux figures qui représentent :

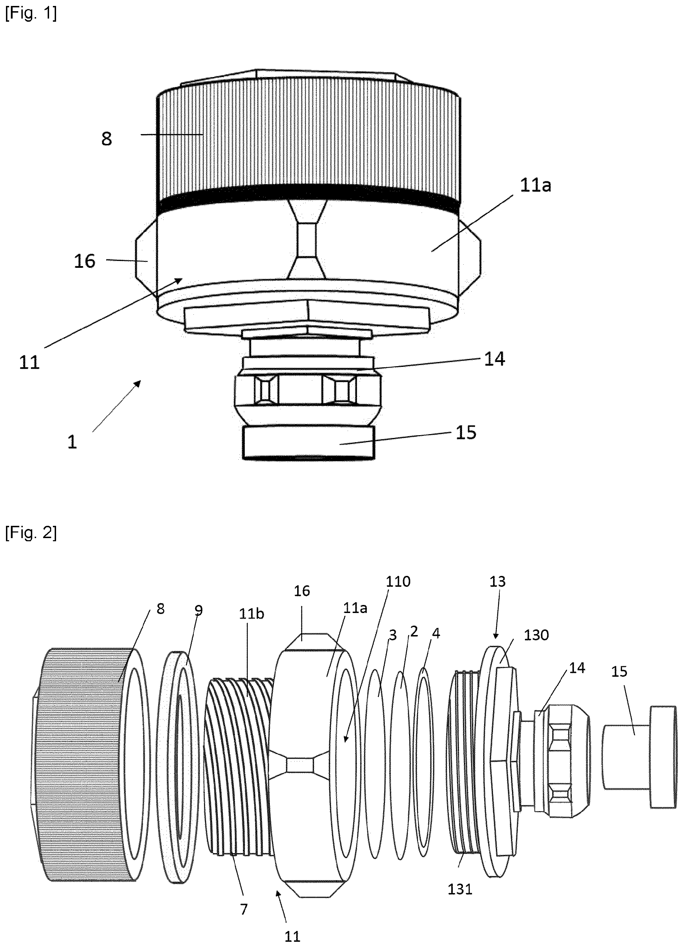

[Fig. 1] une vue en perspective d'un premier exemple de réalisation de dispositif de prélèvement d'un ensemble selon l'invention ;
[Fig. 2] une vue en perspective éclatée du dispositif de la figure 1 ;
[Fig. 3] une vue en coupe d'un dispositif selon la figure 1 ;
[Fig. 4] une vue en coupe d'un deuxième exemple de réalisation de dispositif selon un aspect l'invention ; et

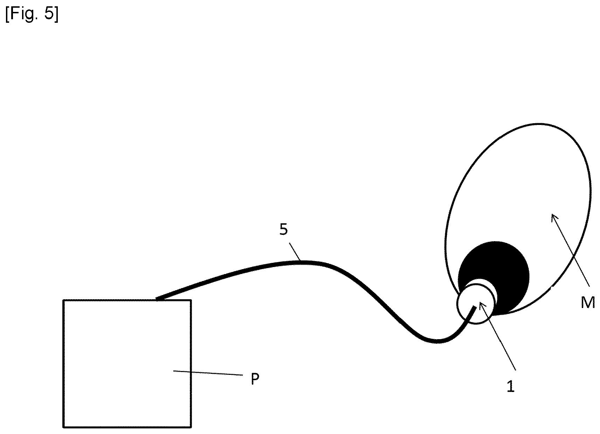

[Fig. 5] un schéma de principe d'un ensemble selon l'invention en utilisation.

Le dispositif de prélèvement 1 selon un aspect de l'invention encore appelé cassette de prélèvement se présente sous la forme d'une cassette implantable dans un équipement de protection individuel EPI tel qu'un équipement de protection respiratoire EPR isolant. Dans l'exemple décrit ici, un tel dispositif est implantable dans un masque de protection respiratoire de classe III (risque grave ou mortel) pour des opérateurs exerçant dans un milieu de type risque amiante.

Ce dispositif 1 ainsi implanté dans le masque de protection respiratoire M permet d'effectuer un prélèvement au niveau de l'air contenu dans le masque M, c'est-à-dire l'air que respire l'utilisateur du masque M qui constitue un environnement isolé de manière étanche par rapport à l'environnement extérieur. Il est ainsi possible de contrôler directement la teneur en fibres d'amiante à l'intérieur du masque M et ce, en situation de travail, par prélèvement de l'air à l'intérieur du masque M lors de l'utilisation dans l'environnement de travail pollué et dangereux sans rompre l'isolement de l'air contenu dans le masque M.

Un tel dispositif 1 est utilisé afin de garantir la sécurité des opérateurs. L'air prélevé est ainsi directement l'air présent à l'intérieur du masque M et inhalé par l'utilisateur du masque M, provenant d'une source d'air et/ou de l'environnement extérieur et qui a été filtré de manière appropriée.

Le dispositif se présente sous forme d'une cassette 1 comportant une embase 11, sous forme d'un corps cylindrique tubulaire ouvert à ses deux extrémités. L'espace intérieur de cette embase 11 définit le compartiment 110 du dispositif 1 dans lequel sont logés un support de filtre 2 et un filtre 3 en tant que moyens de retenue pour collecter des fibres amiante.

De préférence, on utilise un filtre 3 à membrane en esters de cellulose mélangés (MCE ou MEC) qui est composé de mélanges purs et biologiquement inertes d'acétate de cellulose et de nitrate de cellulose. Les filtres MCE sont hydrophiles et autoclavables, et sont particulièrement bien adaptés pour capter et analyser ensuite les fibres d'amiante.

Le corps ou embase 11 présente une première partie 11a de diamètre Da et une deuxième partie 11b de diamètre Db inférieur à Da. Le corps 11 présente ainsi deux extrémités opposées ouvertes, une côté partie 11a et une, côté partie 11b.

A la jonction entre les deux parties 11a et 11b de l'embase 11 apparaît un épaulement 12 contre lequel est logé le filtre 3, sur lequel est ensuite positionné le support de filtre 2.

L'extrémité côté partie 11b présente un orifice d'entrée dans le compartiment dit orifice de prélèvement 111b, cette extrémité dite extrémité de prélèvement 11b est agencée pour être fixée sur le masque M de telle sorte que l'orifice de prélèvement 111b débouche dans l'atmosphère régnant à l'intérieur dudit masque M lorsqu'il est porté par un utilisateur.

L'extrémité opposée côté partie 11a est dite extrémité de raccordement 11a et forme l'orifice de raccordement 111a destiné à être raccordé à un dispositif d'aspiration P tel qu'une pompe.

Ainsi, l'utilisation de la pompe P permet de prélever l'air présent dans le masque M au travers de la cassette de prélèvement, l'air entrant dans la cassette par l'orifice de prélèvement 111b, traversant le filtre 3 et sortant de l'embase 11 par l'orifice raccordement 111a vers la pompe P.

A cet effet, l'extrémité côté partie 11a du corps 11 présente un couvercle 13 fixé de manière étanche sur ledit corps 11. Ce couvercle 13 est constitué d'un disque 130 pourvu d'un orifice central dans lequel est monté un élément de raccordement 14 au dispositif d'aspiration P.

Cet élément de raccordement 14 est de préférence un raccord presse étoupe permettant la fixation étanche d'une extrémité de tuyau 5, de préférence flexible, dont l'autre extrémité est raccordée à la pompe d'aspiration P. Avant utilisation du dispositif sur un EPR, l'élément de raccordement 14 présente un bouchon d'obturation 15, maintenant l'étanchéité du dispositif 1 avant et après utilisation.

Le couvercle 13 est fixé sur l'extrémité de raccordement 11a de l'embase 11 de manière étanche. De préférence, le couvercle 13 et l'extrémité de raccordement 11a présentent des moyens complémentaires de fixation, tels que des moyens de vissage.

Ainsi, le couvercle 13 présente une jupe 131 ménagée en saillie du disque 130 et pourvue sur sa face externe d'un filetage propre à coopérer avec un taraudage ménagé sur la face intérieure de l'extrémité de raccordement 11a de l'embase 11.

Afin de garantir l'étanchéité du montage du couvercle 13 sur l'embase 11, un joint d'étanchéité 4 est positionné sur le support de filtre 2, l'extrémité de la jupe 131 du couvercle 13 venant en appui sur ledit joint 4 lors du vissage, l'extrémité de l'embase 11 venant en appui contre le couvercle 13. Ce dernier présente un disque 130 dont le diamètre correspond au diamètre extérieur de l'embase 11, le couvercle 13 s'alignant avec l'embase 11 et le serrage assurant qu'aucune fente n'existe entre l'embase 11 et le couvercle 13. De préférence, on appose un scellé à l'intersection embase-couvercle pour garantir que la cassette ainsi formée n'a jamais été utilisée. Ce scellé ne sera rompu qu'au moment où après utilisation, on extraira pour analyse les moyens de retenue contenus dans le compartiment 110.

L'extrémité de prélèvement 111b du corps 11 présente des moyens de fixation sur un orifice ménagé sur le masque M.

De préférence, l'orifice du masque M est pourvu d'une bague de fixation au travers de laquelle l'extrémité de prélèvement 111b du dispositif 1 est engagée vers l'intérieur du masque M lorsque celui-ci est porté par un utilisateur.

La bague de fixation comporte des moyens de fixation complémentaires de moyens de fixation prévus sur l'extrémité de prélèvement 11b de l'embase 11. Ces moyens de fixation sont de préférence des moyens de vissage complémentaires tels qu'un taraudage ménagé à l'intérieur de la bague de fixation du masque M, complémentaire d'un filet 7 ménagé sur la face extérieure de la partie 11b du corps 11. Un joint d'étanchéité 9 est en outre mis en place entre l'embase 11 et la bague de fixation pour garantir un montage étanche du dispositif de prélèvement sur le masque M.

Ces moyens de vissage permettent également la mise en place sur l'extrémité de prélèvement 11b de l'embase 11 d'un bouchon 8, obturant cette extrémité lorsque le dispositif de prélèvement n'est pas utilisé. Le joint d'étanchéité 9 est également présent entre le bouchon 8 et l'embase 11 de manière à garantir l'étanchéité du dispositif 1. On peut proposer en variante un élément d'obturation de l'extrémité sous forme d'une capsule 6 présentant une jupe engageable dans l'extrémité de prélèvement 11b.

Pour fiabiliser le montage de la cartouche sur le masque M, l'embase 11 présente sur sa face extérieure des ailettes 16 ménagées en saillie et permettant l'entraînement en rotation du dispositif 1 pour sa mise en place sur la bague de fixation par vissage.

De manière à permettre une utilisation appropriée du dispositif de prélèvement 1 selon un aspect de l'invention, le montage du couvercle 13 sur l'embase 11 est scellé ce qui garantit que, lors de son implantation sur un masque M en vue d'une utilisation, l'intégrité de la cassette 1, notamment l'étanchéité du compartiment 110, et donc, par conséquent, son efficacité et sa fiabilité quant aux résultats attendus. On garantit ainsi que les moyens de retenue contenus dans la cassette 1 sont bien purs et prêts à l'emploi.

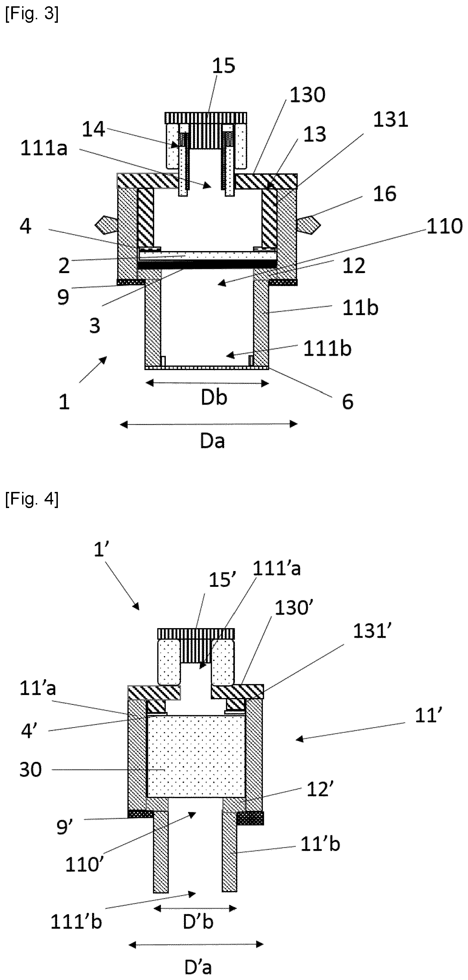

A la figure 4 est représenté, un deuxième exemple de réalisation d'un dispositif 1' selon l'invention qui présente ainsi, une embase 11' définissant un compartiment 110'. Sur l'épaulement 12' formé par les deux parties 11'a et 11'b de l'embase 11' de diamètres Da' et Db' avec Db'<Da', on met en place en tant que moyens de retenue ou piégeage des éléments recherchés une cartouche de matériau poreux 30. Le couvercle 13' est mis en place avec sa jupe filetée 131' et son disque 130' sur l'extrémité de raccordement 11', l'extrémité de la jupe 131' venant en appui étanche sur un joint d'étanchéité 4' posé sur la cartouche 30. L'orifice de raccordement 111'a comporte un raccord presse-étoupe 14' muni d'un bouchon d'obturation 15'. L'embase 11' comporte également des ailettes 16' permettant notamment le montage du dispositif 1' par son orifice de prélèvement 111'b sur un masque.

On décrira maintenant un exemple d'utilisation d'un ensemble selon l'invention comportant un dispositif de prélèvement, avec un équipement individuel respiration isolant M qui permet ainsi de réaliser des mesures de concentration en fibres d'amiante à l'intérieur du masque M en situation de travail par prélèvement d'air, par exemple à un débit entre 7 et 10 l/minute.

Le masque M est spécifiquement conçu pour permettre de réaliser des prélèvements de l'air présent à l'intérieur du masque et directement inhalé par l'utilisateur. Il présente donc à cet effet un orifice permettant la mise en place du dispositif de prélèvement selon l'invention. On procède à la préparation de la cassette et du masque M.

On vérifie avant l'installation de la cassette que le scellé n'est pas détérioré. La cassette 1 comporte sur l'orifice de prélèvement et l'orifice de raccordement son élément d'obturation 8, 15 respectif

On vérifie également la présence du joint d'étanchéité 9 et le bon état général de la cassette et de ce joint 9. La cassette 1 doit être retirée de son emballage et installée sur le masque M dans une zone propre et non contaminée.

On enlève alors le bouchon 15 de la cassette 1 côté orifice de raccordement et on raccorde le flexible 5 d'aspiration. L'extrémité du flexible muni d'un insert métallique est inséré dans le raccord presse étoupe 14 jusqu'à la butée. Le raccord 14 est ensuite serré jusqu'à la butée à l'aide d'une clé spécifique fournie avec le dispositif.

On retire ensuite le bouchon du masque M et on enlève le bouchon 8 côté orifice de prélèvement de l'embase 11. On visse manuellement cette extrémité sur le masque M en utilisant exclusivement les ailettes 16 prévues à cet effet sur la cassette. On serre de façon à mettre en pression le joint 9 pour assurer l'étanchéité du montage.

Une fois, l'utilisateur habillé, conformément à la réglementation en vigueur, le flexible 5 peut être glissé dans les passants d'un harnais porté par l'opérateur et clipsé contre le flexible d'air respirable alimentant le masque M à l'aide de deux clips fournis avec le dispositif de prélèvement.

La pompe d'aspiration P est ensuite installée à l'aide d'un harnais et raccordée au flexible de prélèvement 5. Ainsi équipé, l'opérateur peut alors entrer sur le chantier en zone contaminée. L'utilisation du masque équipé de la cassette de prélèvement est identique à celle d'un masque habituel. Le fonctionnement ou l'arrêt de la pompe de prélèvement d'air n'ont pas d'incidence sur son utilisation.

Il convient cependant de respecter quelques précautions comme le fait que la cassette ne doit en aucun cas être manipulée, dévissée, enlevée tant que l'atmosphère n'est pas respirable sans danger.

Afin de sécuriser le prélèvement, on respecte, en complément de la procédure de décontamination habituelle, les consignes de procédure suivantes :
Le flexible de raccordement 5 doit être obturé si la pompe P est retirée avant l'entrée dans les installations de décontamination par douche.

Au moment d'enlever le masque M, on arrête la douche, on sépare le flexible de prélèvement 5 du harnais, et on ferme la soupape d'arrivée d'air du masque M avant d'enlever celui-ci en levant la tête.

On remet le masque M équipé de la cassette 1 et du flexible de raccordement 5 à la personne en charge de la gestion des cassettes en maintenant l'ouverture de prélèvement de la cassette 1 orientée vers le bas jusqu'à ce qu'elle soit retirée du masque. Il convient également de veiller à ne surtout pas mouiller l'intérieur du masque à ce moment.

La personne en charge de la gestion des cassettes de prélèvement doit impérativement :
Sécher parfaitement le masque, la cassette 1 et le flexible 5 à l'aide de papier absorbant.
Dévisser de la cassette 1 du masque M en la manipulant exclusivement avec les ailettes 16 et en maintenant l'ouverture de prélèvement 111b ainsi libérée orientée vers le bas, puis obturer l'ouverture 111b avec le bouchon adéquat 8.
Désolidariser le flexible 5 de la cassette 1 en desserrant le raccord presse-étoupe 14 à l'aide des clefs fournies puis obturer le presse-étoupe 14 avec le bouchon 15 supérieur de la cassette 1.
Restituer le masque M à son utilisateur pour l'achèvement des opérations de nettoyage et d'entretien.

La cassette 1 avec le filtre 3 potentiellement contaminé est ainsi récupérée et envoyée pour prise en charge par un laboratoire accrédité, pour analyse et éventuellement archivage.

La cassette 1 est insérée par exemple dans un étui de démontage et le laboratoire récupère le filtre 3 en dévissant le couvercle 13 (ce qui rompt le scellé) en maintenant la cassette 1, orifice de raccordement avec son couvercle 13 en haut pour ne pas faire tomber le filtre 3. On procède ensuite à l'élimination de la cassette 1 potentiellement contaminée. Les cassettes selon un aspect de l'invention sont de préférence à usage unique.

## Revendications

1. Ensemble de contrôle de l'atmosphère régnant au sein d'un premier environnement isolé par rapport à un second environnement différent en termes de qualité d'air et/ou de composition de l'atmosphère, ledit ensemble comprenant notamment des moyens d'isolation isolant ledit premier environnement du second environnement, un dispositif de prélèvement (1, 1') destiné à collecter des éléments présents dans l'atmosphère régnant au sein du premier environnement, et des moyens d'aspiration, le dispositif de prélèvement comprenant une cassette (1, 1') définissant un compartiment (110, 110') qui présente un orifice d'entrée dit de prélèvement (111b, 111'b) et un orifice de sortie dit de raccordement (111a, 1111'a) qui est raccordable aux moyens d'aspiration (P), des moyens de retenue (3, 30) des éléments dont la présence et/ou la concentration est recherchée, étant logés dans le compartiment (110, 110'), interposés entre les deux orifices,
**caractérisé en ce que** les moyens d'isolation sont constitués d'un équipement de protection individuel isolant définissant pour l'utilisateur une enceinte close et étanche, la cassette (1, 1') comportant en outre des moyens de fixation configurés pour monter de manière étanche, la cassette sur l'équipement de protection individuel isolant qui présente des moyens de fixation complémentaires, avec l'orifice de prélèvement débouchant dans ledit premier environnement isolé, le compartiment (110) de la cassette étant étanche.

2. Ensemble selon la revendications 1, **caractérisé en ce que** les moyens de retenue sont choisis parmi les filtres (3, 30) et les tubes de prélèvement comportant des adsorbants tels que charbon actif, carbone graphite noir, polymère poreux et gels de silice.

3. Ensemble selon l'une des revendications 1 ou 2, **caractérisé en ce que** la cassette comprend une embase (11, 11') sous forme d'un corps cylindrique tubulaire définissant le compartiment (110, 110') dans lequel sont logés les moyens de retenue (3, 30), ledit corps présentant deux extrémités opposées ouvertes, l'une formant l'orifice de prélèvement (111b, 111'b) et l'autre opposée formant l'orifice de raccordement (111a, 111'a), les moyens de retenue (3, 30) étant logés dans le compartiment (110, 110'), interposés entre les deux orifices.

4. Ensemble selon la revendication 3, **caractérisé en ce que** l'embase (11, 11') comporte une première partie (11a, 11'a) d'un certain diamètre Da et une deuxième partie (11b, 11'b) de diamètre Db inférieur au diamètre Da de la première partie (11a, 11'a), un épaulement (12, 12') étant formé à la jonction entre les deux parties de l'embase (11, 11') contre lequel est logé en tant que moyens de retenue un filtre en forme de disque (3, 30).

5. Ensemble selon la revendication 4, **caractérisé en ce que** l'extrémité ouverte de la partie (11b, 11'b) de plus petit diamètre constitue l'orifice de prélèvement (111b, 111'b) et est agencée pour être fixée sur les moyens d'isolation entre les environnements et l'extrémité de la partie de plus grand diamètre est l'extrémité formant l'orifice de raccordement (111a, 111'a) destiné à être raccordé aux moyens d'aspiration (P) tel qu'une pompe à l'aide de moyens de raccordement (14) prévus sur ledit orifice (111a, 111'a)

6. Ensemble selon l'une des revendications 3 à 5, **caractérisé en ce que** l'orifice de raccordement (111a, 111'a) de l'embase (11, 11') présente un couvercle (13, 13') fixé de manière étanche sur ladite embase (11, 11') et pourvu d'un orifice central dans lequel est monté un élément de raccordement (14) aux moyens d'aspiration (P).

7. Ensemble selon la revendication 6, **caractérisé en ce que** l'élément de raccordement est un raccord presse étoupe (14) permettant la fixation étanche d'une extrémité de tuyau (5), de préférence flexible, dont l'autre extrémité est raccordée **aux** moyens d'aspiration (P).

8. Ensemble selon l'une des revendications 6 ou 7, **caractérisé en ce que** le couvercle (13, 13') est fixé sur l'extrémité de raccordement de l'embase (11, 11') de manière étanche, le couvercle (13, 13') et l'extrémité de raccordement de l'embase (11, 11') présentant des moyens complémentaires de fixation, tels que des moyens de vissage, permettant une fixation étanche à l'aide du couple de serrage.

9. Ensemble selon l'une des revendications 1 à 8, **caractérisé en ce que** l'équipement de protection individuel isolant est un équipement de protection respiratoire EPR comprenant un masque (M).

10. Ensemble selon l'une des revendications 1 à 8, **caractérisé en ce que** l'équipement de protection individuel isolant est une combinaison intégrale de protection isolante contre les risques biologiques, chimiques et comprenant une partie masque respiratoire.

11. Ensemble selon la revendication 9 dans sa dépendance aux revendications 3 à 8, **caractérisé en ce que** l'orifice de prélèvement (111b, 111'b) de l'embase (11, 11') présente des moyens de fixation sur un orifice ménagé sur le masque (M) de l'EPR, ledit orifice présentant des moyens de fixation complémentaires pour réaliser un montage étanche.

12. Ensemble selon l'une des revendications 1 à 9, **caractérisé en ce que** le dispositif de prélèvement comporte des éléments d'obturation (15, 8, 6) des orifices de raccordement et de prélèvement.

13. Procédé de contrôle de la qualité et/ou la composition de l'atmosphère régnant au sein d'un équipement de protection individuel isolant tel qu'un équipement de protection respiratoire EPR définissant pour l'utilisateur une enceinte close et étanche et délimitant dans ledit équipement un premier environnement isolé par rapport à un second environnement différent en termes de qualité d'air et/ou de composition de l'atmosphère, **caractérisé par** les étapes suivantes : on monte au niveau des moyens d'isolation de l'équipement de protection individuel, un dispositif de prélèvement comprenant une cassette définissant un compartiment qui présente un orifice d'entrée dit de prélèvement et un orifice de sortie dit de raccordement qui est raccordable à des moyens d'aspiration (P), ledit dispositif étant monté de manière étanche avec son orifice de prélèvement débouchant dans le premier environnement, et le compartiment (110) de la cassette étant étanche, on actionne les moyens d'aspiration pour prélever, au sein du premier environnement, l'atmosphère qui traverse le dispositif de prélèvement qui comporte des moyens de retenue des éléments dont la présence et/ou la concentration est recherchée, logés dans le compartiment, interposés entre l'orifice de prélèvement et l'orifice de raccordement, on démonte ensuite le dispositif de prélèvement et on récupère les moyens de retenue dans le dispositif pour procéder à l'analyse des éléments récupérés sur lesdits moyens de retenue.

14. Procédé selon la revendication 13, **caractérisé en ce qu'**on conserve les moyens de retenue dans des archives.

## Patentansprüche

1. Baugruppe zur Kontrolle der vorherrschenden Atmosphäre in einer ersten Umgebung, die in Bezug auf eine zweite Umgebung isoliert ist, welche sich im Hinblick auf die Luftqualität und/oder die Zusammensetzung der Atmosphäre unterscheidet, wobei die Baugruppe insbesondere ein Isolationsmittel, welches die erste Umgebung von der zweiten Umgebung isoliert, eine Probeentnahmevorrichtung (1, 1') zum Sammeln von Elementen, die in der vorherrschenden Atmosphäre in der ersten Umgebung vorhanden sind, und ein Ansaugmittel aufweist, wobei die Probeentnahmevorrichtung eine Kassette (1, 1') aufweist, die eine Kammer (110, 110') definiert, die eine Eingangsöffnung bzw. Probeentnahmeöffnung (111b, 111'b) und eine Ausgangsöffnung bzw. Verbindungsöffnung (111a, 1111'a) aufweist, die mit dem Ansaugmittel (P) verbindbar ist, wobei sich Haltemittel (3, 30) für Elemente, deren Vorhandensein und/oder Konzentration untersucht wird, in der Kammer (110, 110') befinden und zwischen den beiden Öffnungen angeordnet sind,
**dadurch gekennzeichnet, dass** das Isolationsmittel aus einer individuellen isolierenden Schutzausrüstung besteht, die für den Benutzer einen geschlossenen und dichten Raum bildet, wobei die Kassette (1, 1') ferner Befestigungsmittel aufweist, die dazu ausgebildet sind, die Kassette dichtend an der individuellen isolierenden Schutzausrüstung zu befestigen, die komplementäre Befestigungsmittel aufweist, wobei die Probeentnahmeöffnung in die erste isolierte Umgebung mündet, wobei die Kammer (110) der Kassette dicht ist.

2. Baugruppe nach Anspruch 1, **dadurch gekennzeichnet, dass** die Haltemittel ausgewählt werden aus Filtern (3, 30) und Probeentnahmeröhrchen mit Adsorptionsmitteln wie Aktivkohle, schwarzem Kohlenstoff-Graphit, porösem Polymer und Kieselgel.

3. Baugruppe nach einem der Ansprüche 1 oder 2, **dadurch gekennzeichnet, dass** die Kassette einen Sockel (11, 11') in Form eines zylindrisches rohrförmigen Körpers aufweist, der die Kammer (110, 110') definiert, in dem sich die Haltemittel (3, 30) befinden, wobei der Körper zwei offene entgegengesetzte Enden aufweist, von denen eines die Probeentnahmeöffnung (111b, 111'b) bildet und das andere entgegensetzte Ende die Verbindungsöffnung (111a, 111'a) bildet, wobei sich die Haltemittel (3, 30) in der Kammer (110, 110') zwischen den beiden Öffnungen befinden.

4. Baugruppe nach Anspruch 3, **dadurch gekennzeichnet, dass** der Sockel (11, 11') ein erstes Teil (11a, 11'a) mit einem bestimmten Durchmesser Da und ein zweites Teil (11b, 11'b) mit einem Durchmesser Db aufweist, der kleiner ist als der Durchmesser Da des ersten Teils (11a, 11'a), wobei eine Schulter (12, 12') an der Schnittstelle zwischen den beiden Teilen des Sockels (11, 11') ausgebildet ist, an der als Haltemittel ein Filter in Form einer Scheibe (3, 30) anliegt.

5. Baugruppe nach Anspruch 4, **dadurch gekennzeichnet, dass** das offene Ende des Teils (11b, 11'b) mit kleinerem Durchmesser eine Probeentnahmeöffnung (111b, 111'b) bildet und so angeordnet ist, dass es an dem Isolationsmittel zwischen den Umgebungen befestigt ist, und das Ende des Teils mit größerem Durchmesser das Ende ist, welches die Verbindungsöffnung (111a, 111'a) bildet, die dazu dient, an Ansaugmittel (P), wie z. B. eine Pumpe, mittels an der Öffnung (111a, 111'a) vorgesehener Verbindungsmittel (14) angeschlossen zu werden.

6. Baugruppe nach einem der Ansprüche 3 bis 5, **dadurch gekennzeichnet, dass** die Verbindungsöffnung (111a, 111'a) des Sockels (11, 11') eine Abdeckung (13, 13') aufweist, die dicht an dem Sockel (11, 11') befestigt ist und eine zentrale Öffnung vorsieht, in der ein Element zum Anschluss an das Ansaugmittel (P) montiert ist.

7. Baugruppe nach Anspruch 6, **dadurch gekennzeichnet, dass** das Verbindungselement eine Verbindungsstopfbuchse (14) ist, welche die dichte Befestigung eines Endes eines vorzugsweise flexiblen Schlauchs (5) ermöglicht, wobei das andere Ende mit dem Ansaugmittel (P) verbunden ist.

8. Baugruppe nach einem der Ansprüche 6 oder 7, **dadurch gekennzeichnet, dass** die Abdeckung (13, 13') an dem Verbindungsende des Sockels (11, 11') dicht befestigt ist, wobei die Abdeckung (13, 13') und das Verbindungsende des Sockels (11, 11') komplementäre Befestigungsmittel aufweisen, wie z. B. Verschraubungsmittel, die eine dichte Befestigung mittels eines Anzugsmoments ermöglichen.

9. Baugruppe nach einem der Ansprüche 1 bis 8, **dadurch gekennzeichnet, dass** die individuelle isolierende Schutzausrüstung eine Atemschutzausrüstung, EPR, ist, die eine Maske (M) umfasst.

10. Baugruppe nach einem der Ansprüche 1 bis 8, **dadurch gekennzeichnet, dass** die individuelle isolierende Schutzausrüstung ein isolierender einteiliger Schutzanzug gegen biologische und chemische Gefahren einschließlich Atemschutzmaske ist.

11. Baugruppe nach Anspruch 9 in Abhängigkeit von den Ansprüchen 3 bis 8, **dadurch gekennzeichnet, dass** die Probeentnahmeöffnung (111b, 111'b) des Sockels (11, 11') Befestigungsmittel an einer Öffnung aufweist, die an der Maske (M) der EPR angeordnet ist, wobei die Öffnung komplementäre Befestigungsmittel aufweist, um eine dichte Montage zu realisieren.

12. Baugruppe nach einem der Ansprüche 1 bis 9, **dadurch gekennzeichnet, dass** die Probeentnahmevorrichtung Verschlusselemente (15, 8, 6) für die Verbindungsöffnung und die Probeentnahmeöffnung aufweist.

13. Verfahren zur Kontrolle der Qualität und/oder Zusammensetzung der vorherrschenden Atmosphäre in einer individuellen isolierenden Schutzausrüstung, wie z. B. einer Atemschutzausrüstung, EPR, die für den Benutzer einen geschlossenen und dichten Raum bildet und in der Ausrüstung eine erste Umgebung begrenzt, die in Bezug auf eine zweite Umgebung isoliert ist, welche sich im Hinblick auf die Luftqualität und/oder die Zusammensetzung der Atmosphäre unterscheidet, **gekennzeichnet durch** die folgenden Schritte:
Montieren, auf das Isolationsmittel der individuellen Schutzausrüstung, einer Probeentnahmevorrichtung, die eine Kassette aufweist, welche eine Kammer definiert, die eine Eingangsöffnung bzw. Probeentnahmeöffnung und eine Ausgangsöffnung bzw. Verbindungsöffnung aufweist, die mit dem Ansaugmittel (P) verbindbar ist, wobei die Vorrichtung dicht montiert ist und ihre Probeentnahmeöffnung in die erste Umgebung mündet, und wobei die Kammer (110) der Kassette dicht ist,
Betätigen des Ansaugmittels, um in der ersten Umgebung einer Probe der Atmosphäre zu entnehmen, welche die Probeentnahmevorrichtung durchströmt, die die Haltemittel für Elemente aufweist, deren Vorhandensein und/oder Konzentration untersucht wird, die sich in der Kammer befinden und zwischen der Probeentnahmeöffnung und der Verbindungsöffnung angeordnet sind,
anschließend Demontieren der Probeentnahmevorrichtung und Zurücknehmen der Haltemittel in die Vorrichtung, um mit der Analyse der auf den Haltemitteln befindlichen Elementen fortzufahren.

14. Verfahren nach Anspruch 13, **gekennzeichnet durch** das Aufbewahren der Haltemittel in Archiven.

## Claims

1. An assembly for checking the atmosphere prevailing within a first environment isolated from a second environment that is different in terms of air quality and/or atmospheric composition, said assembly comprising in particular isolation means isolating said first environment from the second environment, a sampling device (1, 1') suitable for collecting elements present in the atmosphere prevailing within the first environment, and suction means, the sampling device comprising a cassette (1, 1') defining a compartment (110, 110') that has a so-called sampling inlet orifice (111b, 111'b) and a so-called connecting outlet orifice (111a, 1111'a) that can be connected to the suction means (P), retaining means (3, 30) for the elements the presence and/or concentration of which is sought being housed in the compartment (110, 110'), interposed between the two orifices, **characterized in that** the isolation means consist of isolation personal protective equipment defining for the user a closed and sealed chamber, the cassette (1, 1') further including fastening means configured to mount in a sealing manner the cassette on the isolation personal protective equipment, which has complementary fastening means, with the sampling orifice of said sampling device emerging into said isolated first environment, the compartment (110) of the cassette being sealed.

2. The assembly as claimed in claim 1, **characterized in that** the retaining means are selected from filters (3, 30) and sampling tubes including adsorbents such as activated carbon, black carbon graphite, porous polymer and silica gels.

3. The assembly as claimed in one of claims 1 or 2, **characterized in that** the cassette comprises a base (11, 11') in the form of a tubular cylindrical body defining the compartment (110, 110') in which are housed the retaining means (3, 30), said body having two open opposite ends, one end forming the sampling orifice (111b, 111'b) and the opposite end forming the connecting orifice (111a, 111'a), the retaining means (3, 30) being housed in the compartment (110, 110'), interposed between the two orifices.

4. The assembly as claimed in claim 3, **characterized in that** the base (11, 11') includes a first portion (11a, 11'a) having a given diameter Da and a second portion (11b, 11'b) having a diameter Db smaller than the diameter Da of the first portion (11a, 11'a), a shoulder (12, 12') being formed at the junction between the two portions of the base (11, 11') against which is housed a disk-shaped filter (3, 30) as retaining means.

5. The assembly as claimed in claim 4, **characterized in that** the open end of the portion (11b, 11'b) with a smaller diameter forms the sampling orifice (111b, 111'b) and is arranged to be fastened to isolation means between the environments and the end of the portion with a larger diameter is the end forming the connecting orifice (111a, 111'a) suitable for being connected to a suction device (P) such as a pump using connecting means (14) provided on said orifice (111a, 111'a).

6. The assembly as claimed in one of claims 3 to 5, **characterized in that** the connecting orifice (111a, 111'a) of the base (11, 11') has a cover (13, 13') sealably fastened to said base (11, 11') and provided with a central orifice in which an element (14) for connection to a suction device (P) is mounted.

7. The assembly as claimed in claim 6, **characterized in that** the connecting element is a gland fitting (14) allowing the sealed fastening of one end of a hose (5), preferably flexible, the other end of which is connected to a suction device (P).

8. The assembly as claimed in either of claims 6 and 7, **characterized in that** the cover (13, 13') is sealably fastened to the connecting end of the base (11, 11'), the cover (13, 13') and the connecting end of the base (11, 11') having complementary fastening means, such as screwing means, making possible sealed fastening due to the tightening torque.

9. The assembly as claimed in one of claims 1 to 8, **characterized in that** the isolation personal protective equipment is a respiratory protective equipment (RPE) comprising a mask (M).

10. The assembly as claimed in one of claims 1 to 8, **characterized in that** the isolation personal protective equipment is an all-in-one isolation suit protecting against biological, chemical hazards, and comprising a respiratory mask portion.

11. The assembly as claimed in claim 9 in dependency of the claims 3 to 8, **characterized in that** the sampling orifice (111b, 111'b) of the base (11, 11') has means for fastening to an orifice made in the mask M of the RPE, said orifice having complementary fastening means for achieving sealed mounting.

12. The assembly as claimed in one of claims 1 to 9, **characterized in that** the sampling device includes elements (15, 8, 6) for closing the connecting and sampling orifices.

13. A method for checking the quality and/or composition of the atmosphere prevailing within isolation personal protective equipment such as respiratory protective equipment (RPE) defining for the user a closed and sealed chamber and delimiting in said equipment a first environment isolated from a second environment that is different in terms of air quality and/or atmospheric composition, **characterized by** the following steps:
a sampling device comprising a cassette defining a compartment that has a so-called sampling inlet orifice and a so-called connecting outlet orifice that can be connected to suction means (P), is mounted on the isolation means of the personal protective equipment, the device being mounted in a sealed manner with its sampling orifice emerging in the first environment and the compartment of the cassette being sealed,
the suction means are activated in order to sample the atmosphere within the first environment, which passes through the sampling device, which includes retaining means for the elements the presence and/or concentration of which is sought, housed in the compartment, interposed between the sampling orifice and the connecting orifice,
the sampling device is then removed and the retaining means are recovered from the device in order to carry out an analysis of the elements recovered from said retaining means.

14. The method as claimed in claim 13, **characterized in that** the retaining means are stored in archives.
